# EUROPEAN PATENT APPLICATION

(11) **EP 3 591 479 A1**
(43) Date of publication of application: **08.01.2020**
(21) Application number: 19184406.7
(22) Date of filing: 04.07.2019
(51) Int. Cl.: G05B 15/02, G06Q 30/06, G06Q 50/16

(54) **DYNAMIC INCLUSION AND EXCLUSION OF SMART-HOME DEVICES**

(30) Priority: 05.07.2018 US 201862694282 P
(71) Applicant: Google LLC, Mountain View, CA 94043 (US)
(72) Inventor: Tan, Leon Shen-Yu, Mountain View, California 94043 (US); Sartin, Elizabeth Anne, Mountain View, California 94043 (US)
(74) Representative: Maikowski & Ninnemann Patentanwälte Partnerschaft mbB

(57) **Abstract**

A dynamic inclusion and exclusion of smart-home devices is described that is generally related to temporary inclusion of smart-home devices installed at a rental property into to an account of a guest by a smart-home service. Access to smart-home devices installed at a rental property is made available based on booking information for a stay that includes an indication of one or more smart-home devices installed at the rental property and an indication of a check-in date and time. During the stay, access to the one or more smart-home devices installed at the rental property is included in the account of the guest with the smart-home service, and a user interface of a smart-home application on a user device of the guest is populated with user interface elements for the included smart-home devices.

## Description

### CROSS REFERENCE TO RELATED APPLICATIONS

This application claims priority to U.S. Provisional Patent Application Serial No. 62/694,282 filed July 5, 2018, the disclosure of which is incorporated by reference herein in its entirety.

### BACKGROUND

Smart-home devices and systems are increasingly popular for sensing environmental conditions, controlling equipment, and securely providing information, control, and alerts to users via applications connected to cloud-based services. Smart-home systems enhance the comfort, convenience, and security of users who establish preferences for settings and schedules for the operation of their smart-home devices via a smart-home application and a smart-home service. When traveling, a user may have limited or no access to the same level of control over environmental and security systems afforded by the smart-home devices, system, and applications the user has at home.

Increasingly, property owners are choosing to participate in accommodation-sharing services to rent vacation properties or some portion of their residence. Large hospitality properties have dedicated staff and systems to handle reservations, check-ins, and checkouts, as well as to monitor environmental and security conditions. Individual property owners may lack the resources to provide a similar level of service to provide guest comfort and security, as well as to monitor their rental property to protect it from potential damage by guests.

### SUMMARY

This summary is provided to introduce simplified concepts of dynamic inclusion and exclusion of smart-home devices. The simplified concepts are further described below in the Detailed Description. This summary is not intended to identify essential features of the claimed subject matter, nor is it intended for use in determining the scope of the claimed subject matter.

In some aspects, a method for dynamic inclusion and exclusion of smart-home devices is described as generally related to temporary inclusion of smart-home devices installed at a rental property into an account of a guest by a smart-home service. The smart-home service receives a booking for the rental property from a booking service, the booking including an indication of one or more smart-home devices installed at the rental property and an indication of a check-in date and time. The smart-home service determines that the check-in date and time match a current date and time, and, in response to determining that the check-in date and time in the check-in event match the current date and time, the smart-home service enables access, by the guest, to the one or more smart-home devices installed at the rental property. The smart-home service enables the access by including the one or more smart-home devices installed at the rental property into the account of the guest with the smart-home service and populating a user interface of a smart-home application on a user device of the guest device with one or more user interface elements for access to the one or more smart-home devices installed at the rental property, the smart-home application being associated with the account of the guest at the smart-home service.

In another aspect, a server device including one or more processors and a memory comprising instructions executable by the one or more processors implements a smart-home service. The smart-home service is configured to receive a booking for a rental property from a booking service that includes an indication of one or more smart-home devices installed at the rental property and an indication of a check-in date and time. The smart-home service is configured to determine that the check-in date and time match a current date and time, and in response to the determination that the check-in date and time match the current date and time, to enable access, by a guest, to the one or more smart-home devices installed at the rental property. The smart-home service enables access for the guest by including access to the one or more smart-home devices installed at the rental property into an account of the guest with the smart-home service and populating a user interface of a smart-home application on a user device of the guest with one or more user interface elements for access to the one or more smart-home devices installed at the rental property, the smart-home application being associated with the account of the guest at the smart-home service.

In a further aspect, a system for dynamic inclusion and exclusion of smart-home devices includes a smart-home application executable by a user device of a guest and a smart-home service. The smart-home service is configured to receive a booking for a rental property from a booking service, the booking including an indication of one or more smart-home devices installed at the rental property and an indication of a check-in date and time, to determine that the check-in date and time match a current date and time, and in response to the determination that the check-in date and time match the current date and time, to enable access by the guest to the one or more smart-home devices installed at the rental property. The smart-home service enables the access by including access to the one or more smart-home devices installed at the rental property into an account of the guest with the smart-home service and sending an indication of the inclusion of the one or more smart-home devices installed at the rental property to the smart-home application. The smart-home application is executable by the user device to receive the indication of the inclusion of the one or more smart-home devices installed at the rental property and to populate a user interface on the user device with one or more user interface elements for access to the one or more smart-home devices installed at the rental property.

An exemplary embodiment, may comprise applying one or more preferences for a smart-home device installed at a home property of the guest to a smart-home device installed at the rental property. For example, the smart-home device installed at the rental property may be one of: a thermostat, a hazard detector, a smart-lock, an entry interface system, a camera, a security hub, a motion sensor, a light sensor, a contact sensor, a Wi-Fi access point, a smart-speaker, a lighting controller, or a media streaming device.

The one or more preferences may, for example, be preferences associated with one or more of: an occupancy state, a time-of-day, a temperature, a geofence, an estimated time of arrival (ETA), a path light brightness, a lighting brightness, an entry code, a time schedule, face data for facial recognition, a camera state, an activity zone, account information, a Service Set Identifier (SSID), voice recognition, voice commands, or any combination thereof.

### BRIEF DESCRIPTION OF THE DRAWINGS

Aspects of dynamic inclusion and exclusion of smart-home devices are described with reference to the following drawings. The same numbers are used throughout the drawings to reference like features and components:
FIG. 1 illustrates an example distributed computing environment for a smart-home system in which various aspects of the dynamic inclusion and exclusion of smart-home devices can be implemented.
FIG. 2 illustrates an example mesh network system in which various aspects of the dynamic inclusion and exclusion of smart-home devices can be implemented.
FIG. 3 illustrates an example environment in which various aspects of the dynamic inclusion and exclusion of smart-home devices installed about a rental property can be implemented.
FIG. 4 illustrates an example environment in which various aspects of the dynamic inclusion and exclusion of smart-home devices can be implemented.
FIG. 5 illustrates an example method of the dynamic inclusion and exclusion of smart-home devices as generally related to temporary inclusion and exclusion of smart-home devices for a rental property in accordance with aspects of the techniques described herein.
FIG. 6 illustrates an example environment in which a distributed computing system can be implemented in accordance with aspects of the techniques described herein.
FIG. 7 illustrates an example mesh network device that can be implemented in a distributed computing environment in accordance with one or more aspects of the techniques described herein.
FIG. 8 illustrates an example system with an example device that can implement aspects of the dynamic inclusion and exclusion of smart-home devices.

### DETAILED DESCRIPTION

Smart-home devices, systems, and applications provide a guest with the ability to establish preferences that can enhance the comfort, convenience, and security of the guest at home. Preferences of the guest include settings for the operation of smart-home devices based on schedules, occupancy inside the home, location of guest devices relative to geofences, and so forth. The guest can also establish preferences for alerts to be sent to the guest based on conditions at home, such as a warning that the temperature in the home has crossed a lower limit, to assist the guest in preventing frozen pipes, an alert that there is an unlocked door when no occupancy is sensed in the home, and so forth.

The preferences for the smart-home devices of the guest may be managed by a cloud-based service that associates the preferences, the smart-home devices, and additional information related to the home with a user account of the guest. Typically, a home or building structure is associated with a single user account, while multiple structures can be associated with the user account. While it may be desirable to allow access to smart-home devices in a vacation rental property to a guest, these relationships between structures and user accounts do not support such sharing. The dynamic inclusion and exclusion of smart-home devices enables temporary sharing of smart-home devices with guests visiting a rental property and enables the guests to apply their smart-home preferences from their homes to the smart-home devices in the rental property.

While the concepts of dynamic inclusion and exclusion of smart-home devices are described in the context of management of smart-home devices in a vacation rental property between a host and guest, the concepts are applicable in additional settings. For example, a resident of a smart-home may employ dynamic inclusion and exclusion of smart-home devices to enable access to, and control of, smart-home devices by an extended family member, neighbor, or caretaker, when the resident is away from home.

Smart-home devices provide owners of vacation rentals with the ability to monitor the security of their properties, manage energy use, enable temporary access for contractors and cleaners, or the like. Equipping a vacation rental property with smart-home devices may make that property more desirable to potential renters who enjoy the convenience of smart-home devices at home. However, reprogramming smart-home devices and configuring communication between guests and those smart-home devices is a time-consuming and, in some cases, a technically-challenging task for a typical vacation property owner. The dynamic inclusion and exclusion of smart-home devices enables temporary sharing of smart-home devices with guests by providing access to many features of smart-home devices while allowing the property owner to retain control over some features and settings such as setting high and low limits on thermostat temperature settings or receiving alerts to anomalous conditions at the rental property.

Booking services that provide listings for rental properties and make bookings for the rental properties may indicate the availability of smart-home devices and functionality for properties with such capabilities. However, while the booking services provide guest access to booking information and reservations via web sites, mobile applications, or both, these web sites or applications do not provide access for controlling smart-home functions or receiving alerts from smart-home devices. The dynamic inclusion and exclusion of smart-home devices links booking information from the booking service to the smart-home services and applications of the guest who is booking a rental. During the time the guest is visiting the rental property, the smart-home capabilities of the rental property are presented to the guest, in the smart-home application of the guest, as an additional structure the guest can access using the same, familiar user interface that the guest uses to interact with smart-home devices and services at home.

Booking services expect that rental properties are represented accurately to potential guests and that the rental property has appropriate safety equipment, such as properly functioning hazard detectors. A connection between booking services and smart-home devices in a rental property provides auditing capabilities for the booking service to validate which smart-home devices are installed in the rental property, where the smart-home devices are installed, and if the smart-home devices are operational. For example, the booking service can audit whether security cameras at the rental property are appropriately declared to guests, that cameras are not mounted in inappropriate locations, that hazard detectors are functional, that listings accurately claim smart-device installations, or the like.

While features and concepts of the described systems and methods for the dynamic inclusion and exclusion of smart-home devices can be implemented in any number of different environments, systems, devices, and/or various configurations, aspects of the dynamic inclusion and exclusion of smart-home devices are described in the context of the following example devices, systems, and configurations.

### Example Environment

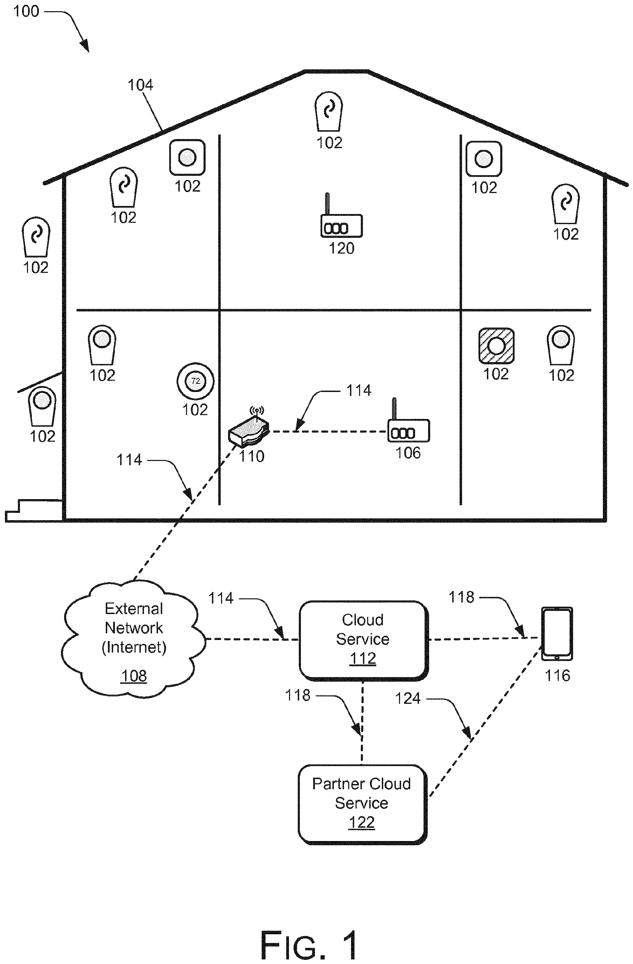

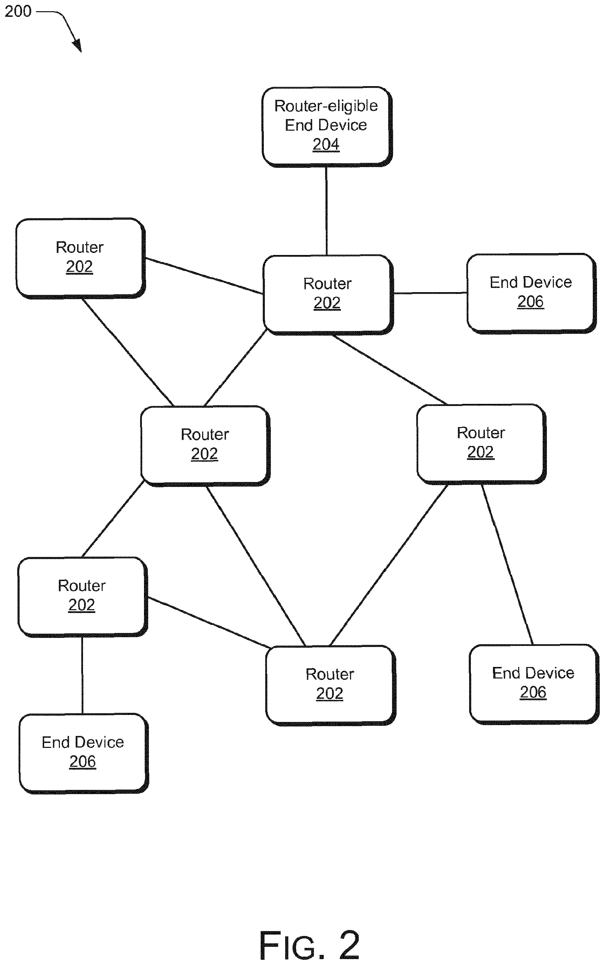

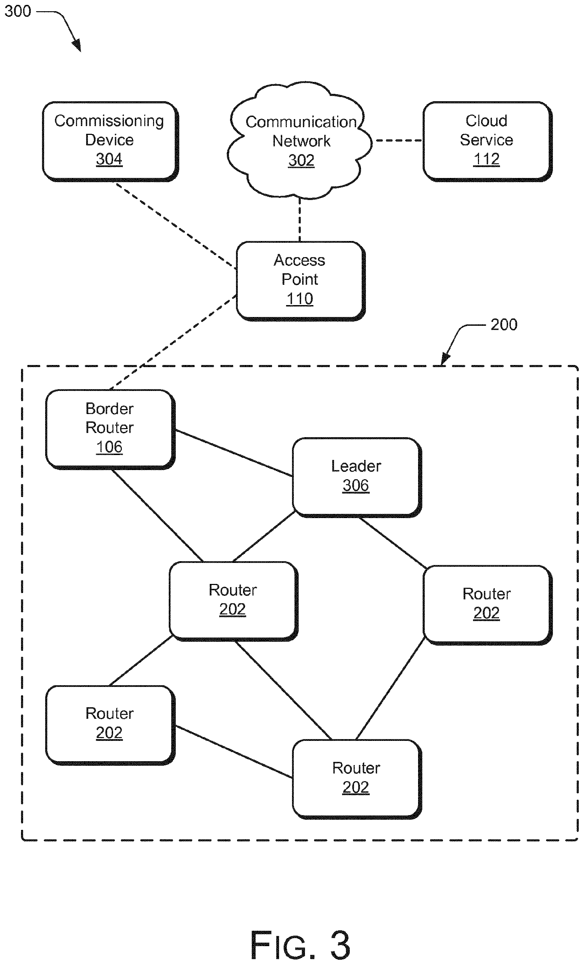

FIG. 1 illustrates an example distributed computing environment 100 for a smart-home system in which aspects of the dynamic inclusion and exclusion of smart-home devices can be implemented. The distributed computing environment 100 includes a home area network (HAN) such as a mesh network 200, described below with respect to FIGs. 2 and 3. The HAN includes mesh network devices 102 that are disposed about a structure 104, such as a house, and are connected by one or more wireless and/or wired network technologies, as described below. The HAN includes a border router 106 that connects the HAN to an external network 108, such as the Internet, through a home router or access point 110.

To provide user access to functions implemented using the mesh network devices 102 in the HAN, a cloud service 112 connects to the HAN via border router 106, via a secure tunnel 114 through the external network 108 and the access point 110. The cloud service 112 facilitates communication between the HAN and internet clients 116, such as apps on mobile devices, using a web-based application programming interface (API) 118. The cloud service 112 also manages a home graph that describes connections and relationships between the mesh network devices 102, elements of the structure 104, and users. The cloud service 112 hosts controllers which orchestrate and arbitrate home automation experiences, as described in greater detail below.

The HAN may include one or more mesh network devices 102 that function as a hub 120. The hub 120 may be a general-purpose home automation hub, or an application-specific hub, such as a security hub, an energy management hub, an HVAC hub, and so forth. The functionality of a hub 120 may also be integrated into any mesh network device 102, such as a smart-thermostat device or the border router 106. In addition to hosting controllers on the cloud service 112, controllers can be hosted on any hub 120 in the structure 104, such as the border router 106. A controller hosted on the cloud service 112 can be moved dynamically to the hub 120 in the structure 104, such as moving an HVAC zone controller to a newly installed smart-thermostat.

Hosting functionality on the hub 120 in the structure 104 can improve reliability when the user's internet connection is unreliable, can reduce latency of operations that would normally have to connect to the cloud service 112, and can satisfy system and regulatory constraints around local access between mesh network devices 102.

The mesh network devices 102 in the HAN may be from a single manufacturer that provides the cloud service 112 as well, or the HAN may include mesh network devices 102 from partners. These partners may also provide partner cloud services 122 that provide services related to their mesh network devices 102 through a partner Web API 124. The partner cloud service 122 may optionally or additionally provide services to internet clients 116 via the web-based API 118, the cloud service 112, and the secure tunnel 114.

The distributed computing environment 100 can be implemented on a variety of hosts, such as battery-powered microcontroller-based devices, line-powered devices, and servers that host cloud services. Protocols operating in the mesh network devices 102 and the cloud service 112 provide a number of services that support operations of home automation experiences in the distributed computing environment 100. These services include, but are not limited to, real-time distributed data management and subscriptions, command-and-response control, real-time event notification, historical data logging and preservation, cryptographically-controlled security groups, time synchronization, network and service pairing, and/or software updates.

FIG. 2 illustrates an example mesh network system 200 that implements the HAN in the distributed computing environment 100. The mesh network 200 is a wireless mesh network that includes routers 202, a router-eligible end device 204, and end devices 206. The routers 202, the router-eligible end device 204, and the end devices 206 each include a mesh network interface for communication over the mesh network. The routers 202 receive and transmit packet data over the mesh network interface. The routers 202 also route traffic across the mesh network 200. The routers 202 and the router-eligible end devices 204 can assume various roles, and combinations of roles, within the mesh network 200, as discussed below.

The router-eligible end devices 204 are located at leaf nodes of the mesh network topology and are not actively routing traffic to other nodes in the mesh network 200. The router-eligible device 204 is capable of becoming a router 202 when the router-eligible device 204 is connected to additional devices. The end devices 206 are devices that can communicate using the mesh network 200, but lack the capability, beyond simply forwarding to its parent router 202, to route traffic in the mesh network 200. For example, a battery-powered sensor is one type of end device 206.

The routers 202, the router-eligible end device 204, and the end devices 206 include network credentials that are used to authenticate the identity of these devices as being a member of the mesh network 200. The routers 202, the router-eligible end device 204, and the end devices 206 also use the network credentials to encrypt communications in the mesh network.

During sleep periods, a child end device 206 that sleeps is not available on the mesh network 200 to receive data packets addressed to the child end device 206. The child end device 206 attaches to a parent router 202, which responds, on behalf of the child end device 206, to mesh network traffic addressed to that child end device 206.

The child end device 206 also depends on the parent router 202 to receive and store all data packets addressed to the child device 206, including commissioning datasets, which may be received while the child end device 206 is sleeping. When the child end device 206 awakes, the stored data packets are forwarded to the child end device 206. The parent router 202 responding on behalf of the sleeping child end device 206 ensures that traffic for the child end device 206 is handled efficiently and reliably on the mesh network 200, as the parent router 202 responds to messages sent to the child end device 206, which enables the child end device to operate in a low-power mode for extended periods of time to conserve power.

FIG. 3 illustrates an example environment 300 in which various aspects of the dynamic inclusion and exclusion of smart-home devices can be implemented. The environment 300 includes the mesh network 200, in which some routers 202 are performing specific roles in the mesh network 200. The devices within the mesh network 200, as illustrated by the dashed line, are communicating securely over the mesh network 200, using the network credentials.

The border router 106 (also known as a gateway and/or an edge router) is one of the routers 202. The border router 106 includes a second interface for communication with an external network, outside the mesh network 200. The border router 106 connects to an access point 110 over the external network. For example, the access point 110 may be an Ethernet router, a Wi-Fi access point, or any other suitable device for bridging different types of networks. The access point 110 connects to a communication network 302, such as the Internet. The cloud service 112, which is connected via the communication network 302, provides services related to and/or using the devices within the mesh network 200. By way of example, and not limitation, the cloud service 112 provides applications that include connecting end user devices (internet clients), such as smart phones, tablets, or the like, to devices in the mesh network 200, processing and presenting data acquired in the mesh network 200 to end users, linking devices in one or more mesh networks 200 to user accounts of the cloud service 112, provisioning and updating devices in the mesh network 200, and so forth.

A user choosing to commission and/or configure devices in the mesh network 200 uses a commissioning device 304, which connects to the border router 106 via the external network technology of the access point 110, to commission and/or configure the devices. The commissioning device 304 may be any computing device, such as a smart phone, tablet, notebook computer, and so forth, with a suitable user interface and communication capabilities to execute applications that control devices to the mesh network 200. Only a single commissioning device 304 may be active (*i.e.,* an active commissioner) on the mesh network 200 at time.

One of the routers 202 performs the role of a leader 306 for the mesh network 200. The leader 306 manages router identifier assignment and the leader 306 is the central arbiter of network configuration information for the mesh network 200. The leader 306 propagates the network configuration information to the other devices in the mesh network 200. The leader 306 also controls which commissioning device is accepted as a sole, active commissioner for the mesh network 200, at any given time.

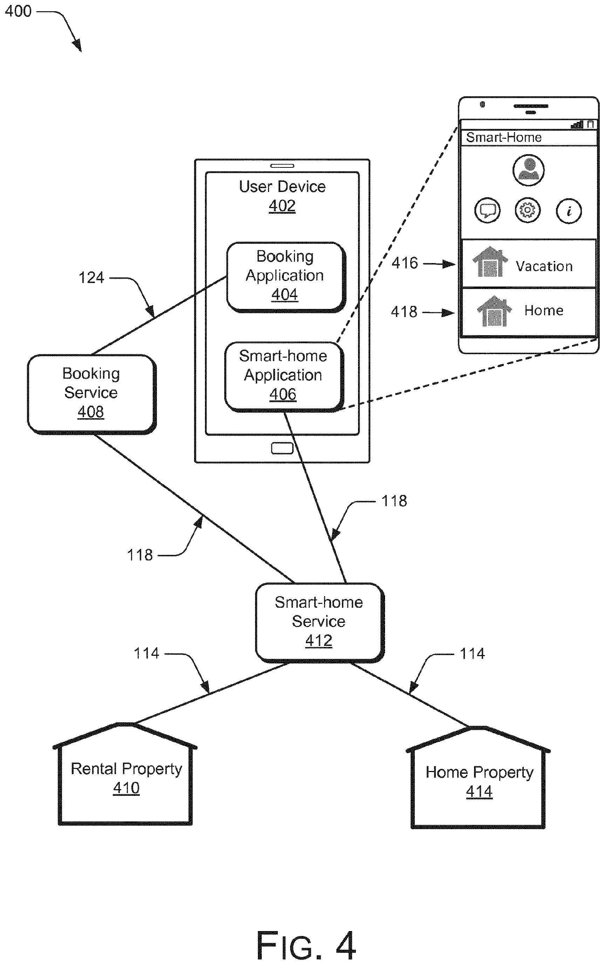

FIG. 4 illustrates an example environment 400 in which various aspects of the dynamic inclusion and exclusion of smart-home devices installed about a rental property can be implemented. The internet client 116 is illustrated as a user device 402 that includes a booking application 404 and a smart-home application 406. The booking application 404 communicates with a booking service 408 via the partner web API 124. The booking application 404 and the booking service 408 provide guest access to manage bookings for stays at rental properties, such as a rental property 410.

The smart-home application 406 communicates with a cloud service 112, illustrated as a smart-home service 412. The smart-home application 406 communicates with the smart-home service 412 via the web-based API 118. The smart-home service 412 communicates with smart-home devices installed about the rental property 410 and the home property 414 using the secure tunnels 114.

When the guest makes a booking with the booking service 408 for the rental property 410 that has smart-home devices, the booking service 408 sends the booking information to the smart-home service 412. The information includes an identifier of the rental property 410, date and time information related to the booking (*e.g.,* check-in date, check-in time, check-out date, check-out time, and so forth), guest credentials (*e.g.,* a guest name, a password, or both) for a guest account associated with the rental property 410 at the smart-home service 412, and an indication of the smart-home devices and functions that the guest is allowed to access during the stay of the guest at the rental property 410.

The smart-home service 412 associates the received booking information with the user account of the guest at the smart-home service 412. When the check-in date and time for the booking arrives, the smart-home service 412 includes the allowed smart-home devices and functions of the rental property 410 into the user account and in the smart-home application 406, as shown at 416, in addition to the smart-home devices and functions of the home property 414, as shown at 418. When the allowed smart-home devices and functions of the rental property 410 are included into the user account, the smart-home application 406 populates user interface elements into the user interface of the smart-home application 406 for the structure and the allowed smart-home devices and functions of the rental property 410.

When the rental property 410 is available to the guest in the smart-home application 406, the guest can set preferences for the smart-home devices and functions of the rental property, including applying preferences and settings from the guest's home property 414. When the guest's visit at the rental property concludes, access to the smart-home devices and functions of the rental property 410 are removed from the smart-home application 406 by depopulating the user interface elements for the structure and the allowed smart-home devices and functions of the rental property 410.

Preferences for smart-home devices are related to traits, resources, and interfaces of the smart-home devices. Preferences, along with the traits, resources, and interfaces are hosted in controllers, which can be hosted by various entities in the distributed computing environment 100 and migrated between these entities. For example, the controllers for a combination of traits, resources, interfaces, and associated preferences can be hosted by the smart-home service 412, by the hub 120, or by the smart-home device. Additionally, or alternatively, the controllers for a combination of traits, resources, interfaces, and associated preferences can be partitioned with some of the portions residing at the smart-home service 412, the hub 120, the smart-home device, or any combination thereof. The hosting and distribution of traits, resources, interfaces, and controllers is described in U.S. Patent Application Serial No. 15/812,270 entitled "Distributed Resource Model" filed November 14, 2017, the disclosure of which is incorporated by reference herein in its entirety. The application of a preference to a smart-home device can occur at any combination of the locations where the traits, resources, interfaces, and associated preferences are hosted in the distributed computing environment.

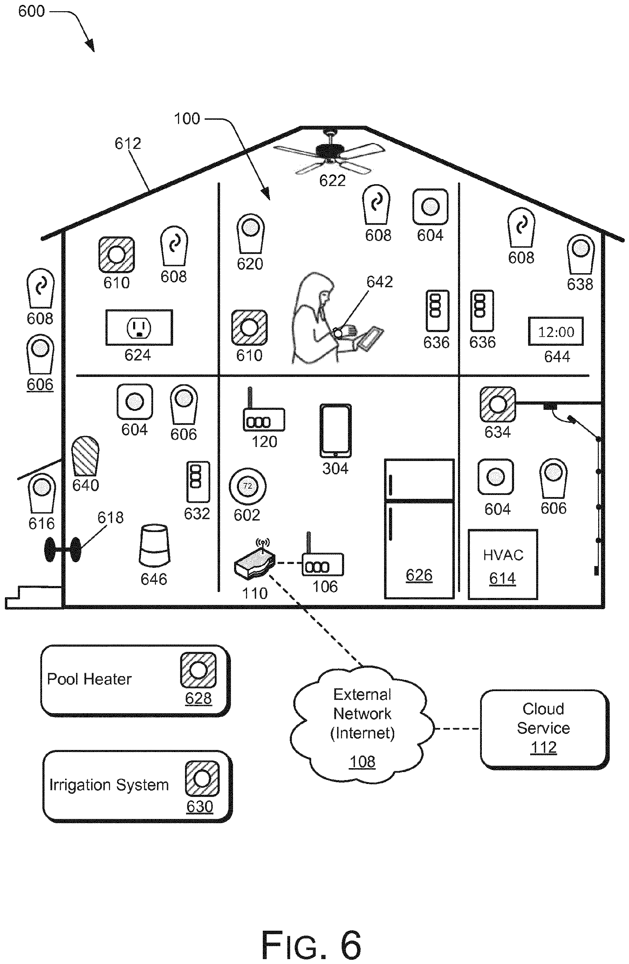

Aspects of control of smart-home devices and functions by the host of the rental property 410 and the guest are described in detail below. A number of examples are provided below with respect to specific types of smart-home devices; however, the concepts described can be applied to any smart-home device, such as those described with reference to FIG. 6 below.

### Smart-Thermostat Access

The guest may have established preferences at home for temperature settings based on occupancy or time-of-day, such as a temperature setting for sleep hours of the day. In aspects, these temperature preferences are applied to a smart-thermostat in the rental property 410, so that the rental property 410 will be pre-cooled or pre-heated to match the guest's preferences when the guest arrives for check-in. During the guest's stay, the guest's preferences for temperature settings, based on occupancy, time-of-day, or both, are applied to the smart-thermostat in the rental property 410. The guest also has remote access to settings for the smart-thermostat in the rental property 410 through the smart-home application 406.

A guest may have established one or more geofences around the location of the home property 414, for example to begin pre-heating or pre-cooling the home property 414 based on crossing into the geofenced area or having a specific estimated time of arrival (ETA) to the home property. While on vacation, the guest can create new geofences relative to the rental property 410 or have the smart-home service 412 create a copy of geofences from the home property 414, which are centered on the location of the rental property 410, to provide the same location-based pre-heating or pre-cooling experience the guest experiences at home.

In addition to guest comfort, the host of the rental property 410 benefits from use of the smart-thermostat. The host can establish temperature settings to conserve energy when the rental property 410 is not rented. In aspects, based on setting safety temperatures and limits, the host can limit the ability of the guest to set the temperature in the rental property 410 to unreasonably high or low temperatures. The host can receive alerts when the temperature in the rental property 410 exceeds a safety temperature. For example, if the temperature in the rental unit drops to a dangerously low temperature, the host is alerted before there is damage from frozen pipes.

### Hazard Detectors

When a guest stays in the rental property 410, which is equipped with hazard detectors, the guest is assured there is protection from smoke, fire, and carbon monoxide. A guest may have established preferences, such as a brightness level, at home, for path lighting provided by hazard detectors when an alarm is sounded or when motion is detected by a hazard detector to provide a nightlight for the guest in unfamiliar settings. In aspects, these preferences are applied to hazard detectors in the rental property, so that in the event of an alarm, the guest will have the same level of path lighting from the hazard detectors that the guest experiences at home. In another aspect, while staying at the rental property 410, the guest receives push notifications via the smart-home application 406 from the hazard detectors if a hazard condition is detected while the guest is away from the rental property 410.

The host of the rental property 410 also benefits from use of the hazard detectors connected via the smart-home service 412. In additional to alerts to alarms in the rental property 410, the hazard detectors periodically test the hazard detector's batteries and sensors and report status to the host, avoiding trips to the rental property 410 to test the hazard detectors.

### Smart-Locks

In aspects, the guest may have established preferences for entry codes (*e.g.,* PIN codes) and alerts for smart-locks at home. During the stay, the preferences of the guest are applied for the smart-lock(s) in the rental property 410. The applied preferences enable the guest to lock and unlock the rental property 410 using the same PIN codes the guest uses at home. Applying the preferences of the guest for the smart-lock at the rental property 410 eliminates the need for the guest to remember a new PIN code for the stay at the rental property 410 or to decide to obtain and return a physical key for the rental property 410.

In aspects, the guest has control of the smart-lock at the rental property 410 both directly at the smart-lock and via the smart-home application 406. For example, if the guest forgets to lock the rental property 410 when leaving for the day, the guest can use the smart-home application 406 to remotely lock the smart-lock. In a further example, the smart-home service 412 maintains status information for the rental property 410 that is received, inferred, or both, from one or more smart-home devices associated with the rental property 410. If the smart-home service 412 determines that an occupancy state of the rental property 410 is in an "away" state and a smart-lock is unlocked, the smart-home-service 412 provides a push alert to the guest via the smart-home application 406 so that the guest can act to secure the rental property 410. If the smart-lock is unlocked while the guest is away, such as by a cleaning service entering the rental property 410, the guest receives a push alert via the smart-home application 406 indicating that the rental property 410 was unlocked.

In addition to guest convenience, the host for the rental property 410 benefits from use of smart-locks. The host does not need to maintain physical keys for guests and contractors. In aspects, the host establishes temporary, time-limited keys (*e.g.,* PIN codes) that are unique to each party that is authorized to enter the rental property 410. The smart-lock, the smart-home service 412, or both, can alert the host when particular PIN codes are used to lock or unlock the smart-lock and maintain a historical log to audit which users locked or unlocked the smart-lock at the rental property 410. Based on the booking information received from the booking service 408, the smart-home service 412 automatically activates the home PIN code of the guest for the smart-lock at the check-in date and time included in the booking information. Alternatively, the PIN codes from the guest's home can be dynamically included into the smart-locks at the rental property 410 at check-in and dynamically excluded at check out. Or alternatively, the guest may use a set of travel settings and PIN codes that the guest uses for all vacation rental stays, which are different from the PIN codes of the guest's home, and these travel settings and PIN codes can be dynamically included into the smart-locks at the rental property 410 at check-in and dynamically excluded at check out.

### Entry Interface System

An entry interface system (*e.g.,* video doorbell) installed at the rental property 410 provides enhanced security for the guest during the stay at the rental property 410. In aspects, based on motion detection, proximity detection, or a push of a button on the entry interface system, the guest receives a push alert, in the smart-home application 406, to the presence of persons at the entry of the rental property 410. During the guest's stay at the rental property 410, the smart-home service 412 applies the home preferences of the guest to the operation of the entry interface system at the rental property 410. For example, the guest may bring settings from home, such as settings for a quiet time schedule that mutes alerts from the entry interface system, such as during sleep times, to prevent disturbing the guest.

In another aspect, the entry interface system and the smart-home service 412 apply facial recognition to images of people captured by the camera included in the entry interface system at the rental property 410. The captured images are compared with facial recognition data from the user account of the guest to provide announcements of family members' arrivals at the rental property 410. Additionally or optionally, the guest may add facial recognition associated with the rental property 410 that is retained only for the duration of the stay at the rental property 410 or retained for future visits.

In aspects, the entry interface system provides the host of the rental property 410 with security enhancement and remote property management when the rental property 410 is unoccupied. The entry interface system, the smart-home service 412, or both can alert the host in response to motion detection, proximity detection, or a push of a button on the entry interface system, as well as maintaining a historical log to audit activity at the entry of the rental property 410. The entry interface system may use facial recognition to notify the guest or host if an unfamiliar face is identified at the entry.

In other aspects, the entry interface system provides features to enhance management of the rental property 410 for the host. For example, the booking information received from the booking service 408 may include a profile picture of the guest. The entry interface system and the smart-home service 412 use facial recognition, based on the received profile picture, to identify the guest when the guest first arrives and alert the host to the arrival of the guest. Additionally or optionally, the host can use the audio functions of the entry interface system and the smart-home application 406 to greet the guest.

In an additional aspect, the door entry system can be used alone or with additional smart-home devices, as described below, to detect abuse of the rental property 410 or violation of terms of the rental agreement. For example, the entry interface system and the smart-home service 412 use facial recognition or other techniques to determine the number of unique individuals entering or staying in the rental property 410. If the number of individuals staying in the rental property 410 exceeds the number allowed by the rental agreement, the smart-home service 412 alerts the host to the potential violation.

### Cameras

Indoor and/or outdoor cameras installed at the rental property 410 enhance security for the guest during the stay at the rental property 410 and for the host when the rental property 410 is unoccupied. Many booking services may require the host to disclose whether there are cameras at the rental property 410 to allay privacy concerns of potential guests. In aspects, the dynamic inclusion and exclusion of smart-home devices enhances the assurance of privacy for the guest by providing control of the cameras at the rental property 410 via the smart-home service 412 and the smart-home application 406.

While the guest can simply disable all cameras at the rental property for privacy during the stay, the dynamic inclusion and exclusion of smart-home devices enables the guest to apply preferences from cameras at the home property 414 to the cameras in the rental property 410, create new preferences for the cameras, or both. For example, when the smart-home service 412 determines that the occupancy of the rental property 410 is in an "Away" state, the cameras are activated for the guest based on the home camera preferences of the guest that activate cameras when the home property 414 is in the "Away" state.

In other aspects, the dynamic inclusion and exclusion of smart-home devices enables the guest to customize the operation of the cameras on a temporary basis during the stay. For example, the guest may define one or more activity zones within the field of view of a camera to provide an alert, via the smart-home application 406, if activity is sensed within the activity zone of the camera. In another example, dynamic inclusion and exclusion of any cameras, including the camera in an entry interface system, may automatically turn off the cameras altogether or turn on an indicator light or light ring on the cameras so that the guest is aware of the camera and its recording.

For the host, indoor or outdoor cameras installed at the rental property 410 provide the host of the rental property 410 with security deterrence and remote property management when the rental property 410 is unoccupied. In aspects, exterior cameras can alert the host to the arrival of the guest at check-in. For example, the booking information received from the booking service 408 may include the profile picture of the guest. An exterior camera and the smart-home service 412 use facial recognition based on the received profile picture to identify the guest when the guest first arrives and alerts the host to the arrival of the guest. Additionally or optionally, the host can use the audio functions of the exterior camera and the smart-home application 406 to greet the guest.

### Security System

The security deterrence provided by a security system at the rental property can provide peace of mind for guests. Various types of security systems have different user interfaces, some of which may be terse or unfamiliar to the guest, discouraging the guest, who may be concerned about triggering false alarms, from using the security system. In aspects, when the security system at the rental property 410 employs the same smart-home technologies as a security system at the home property 414, the guest can enjoy additional security using the familiar user interfaces of the smart-home application 406.

In aspects, the guest may have established preferences for entry codes (*e.g.,* PIN codes) and alerts for the security system at the home property 414. During the stay, the preferences of the guest are applied for the security system in the rental property 410. The guest can arm and disarm the security system at the rental property 410 using the same PIN codes the guest uses at home. Applying the preferences of the guest for the security system at the rental property 410 eliminates the need for the guest to remember a new PIN code for the stay at the rental property 410 and to receive familiar security alerts via the smart-home application 406.

In aspects, the guest may also use a Radio Frequency Identification (RFID) tag, such as an RFID tag embedded in a key fob or other device, facial recognition using a camera or the entry interface system, or one or more geofences associated with a user device to arm or disarm the security system at the home property 414. The guest's RFID tag from home can be dynamically included and excluded so that the guest's RFID tag can be used to arm and disarm the security system at the rental property 410 during the stay. These preferences of the guest for arming or disarming the security system at the home property 414 can be applied to the security system at the rental property 410 during the stay using the smart-home service 412 and the smart-home application 406 to provide convenience and a consistent user experience for the guest.

In aspects, the security system provides the host of the rental property 410 with security deterrence when the rental property 410 is unoccupied, including automatically arming and disarming the security system between bookings, as well as providing remote access control for service personnel visiting the rental property 410. By enabling the preferences of the guest for the security system, the management efforts of the host are reduced by reducing or eliminating the need to manage physical keys or create and program unique PIN codes for each guest. The support effort of explaining the alarm system to each guest or responding to false alarms triggered by guests is reduced by applying the preferences of the guest to the security system at the rental property 410.

In another aspect, door sensors or window sensors can notify the host if the guest has left a door or window open after checkout, without the host needing to physically visit the vacation rental property 410. The notification enables the host to promptly address any resulting security or energy waste issues.

### Wi-Fi Access

When travelling, many guests have come to expect Internet access, particularly via Wi-Fi, to access information about local attractions, to stay in touch with friends and family, or to conduct business while away from the office. For the guest to connect to a Wi-Fi access point at the rental property 410, the host needs to provide access information to the guest, such as the Service Set Identifier (SSID) and a password to securely connect to the Wi-Fi access point. However, the host may want to provide selective access to the network at the rental property 410, as well as placing controls on the bandwidth available to the guest.

In aspects, the host establishes a guest network using the Wi-Fi access point at the rental property 410 that has an associated SSID to identify the guest network. To limit access to the guest network, the host can configure the smart-home service 412 and the Wi-Fi access point to automatically generate a guest password for the guest network for each booking that is received from the booking service 408. The smart-home service 412 shares the generated guest password with the booking service 408 which associates the generated guest password with the booking of the rental property 410. The booking service 408 provides the generated guest password to the guest via the booking application 404. Additionally or alternatively, the smart-home service 412 provides the generated guest password to the guest via the smart-home application 406. In another aspect, the Wi-Fi access point at can be populated with the same SSID and password that the guest uses at home or with an SSID and password that the guest uses for all vacation rental stays. In this way, the guest's Wi-Fi devices can automatically connect to the Wi-Fi network at the rental property 410.

In another aspect, the host may configure the guest Wi-Fi network to provide the guest access to smart-home devices via a web browser of the user device 402 in addition to access via the smart-home application 406. For example, the host configures the guest network to include smart-home devices that can be controlled through a web browser and the Wi-Fi access point using a service (e.g., On.Here) to pair the user device 402 to one or more smart-home devices and enable the guest to control the paired one or more smart-home devices.

### Smart-Speakers

Smart-speakers provide voice access to digital assistant services, voice control of smart-home devices, access to voice calling services, and single room or multi-room streaming of media. Smart-speakers may include a display, a video camera, or both. The guest may have established preferences such as privacy settings, customized trigger phrases, customized voice commands, customized voice recognition, or the like for smart-speakers at home. In aspects, the preferences that the guest has established at home can be applied by the guest to smart-speakers at the rental property 410 during the stay. In another aspect, the smart-speakers at the rental property 410 can be dynamically paired to the guest account upon check-in, and dynamically unpaired upon check-out.

In aspects, the host, the booking service, or both can configure the smart-speakers and the associated digital assistant of the smart-speaker to provide concierge services for the guest. For example, the digital assistant is configured to provide access to basic services such as local weather information, local traffic information, or the like, or to access more advanced services to contact the host, the booking service, or another local concierge service to assist the guest with local recommendations, making reservations, booking activities, contacting the host or the booking service about issues related to the rental property 410, and so forth.

### Media Streaming Devices

A guest may have preferences for streaming services associated with streaming devices at home, such as parental controls, account identifiers, passwords, or the like. To use a streaming device at the rental property 410, the guest needs to log into the streaming services on the streaming device and remember to log out of those services before departing.

In aspects, the streaming service preferences of the guest are applied for streaming devices at the rental property 410 by the smart-home service 412 during the stay at the stay and removed from the streaming devices when the stay is over. The preferences of the guest can be applied in full or in part. For example, the guest may be comfortable with all the preferences being applied by the smart-home service 412 or may want to restrict which preferences are applied, such as applying all preferences except the password of the guest for the streaming services. The guest can control the application of preferences via the booking application 404 or the smart-home application 406.

### Multi-device Applications

In addition to the benefits to the host and guest from dynamic inclusion and exclusion of smart-home devices, additional features, specific to the vacation rental experience, are enabled when multiple smart-home devices, the booking service 408, and the smart-home service 412 work together. These applications provide greater peace of mind and convenience for both the host and the guest.

In aspects, smart-locks, the entry interface system, and cameras are used in conjunction with the booking service 408 and smart-home service 412 to provide self-check-in when the guest arrives at the rental property 410. The entry interface system, exterior cameras, or both are used to perform facial recognition of the guest from a picture included in the booking service 408 profile of the guest or the booking for the stay. When the guest is recognized, the host is notified and can choose to greet the guest using entry interface system or exterior camera.

In another aspect, the guest can enter a PIN code into a keypad of the smart-lock which can be used to notify the host that the guest has arrived. The entry of the PIN code can also act as a signature to verify that the guest is checking into the rental property 410 and trigger a notification to the host that the guest has arrived.

The smart-locks, the entry interface system, and the cameras also provide the host with control and an audit history of service workers visiting the rental property 410. In aspects, the host can validate the identity of service workers by using the entry interface system, cameras, or both for facial recognition to identify the workers. The host can also monitor cleaning and maintenance work without being physically present at the rental property 410.

When rental properties are listed with the booking service 408, the listing indicates a maximum number of occupants that can reside in the rental property 410 during the stay. Occasionally, some guests will abuse these limits and exceed the maximum number of occupants.

In other aspects, multiple devices in or about the rental property 410 are used to determine if the occupancy of the rental property is in violation of occupancy limits. For example, the entry interface system and exterior cameras may detect a number of unique faces of persons entering the rental property 410 or entering the rental property 410 with luggage. Additionally or alternatively, the Wi-Fi access point in the rental unit 410 may identify a larger than expected number of devices operating on the Wi-Fi network of the rental property 410. The number of detected of occupants, the number of Wi-Fi devices, as well as other indicators or inferences, may be provided to the host so that the host can investigate if the guest is in violation of the rental agreement.

In another aspect, the guest may have established a set of faces that, when recognized, unlock a smart-lock, disarm a security system or both. The set of faces for facial recognition are included in the preferences that are applied for the smart-home devices of the rental property 410 during the stay. For example, the facial recognition from images provided by the entry interface system, cameras, or both are used to unlock the smart-lock of an entry door to the rental property 410 or disarm the security system 410 of the rental property 410.

### Example Method

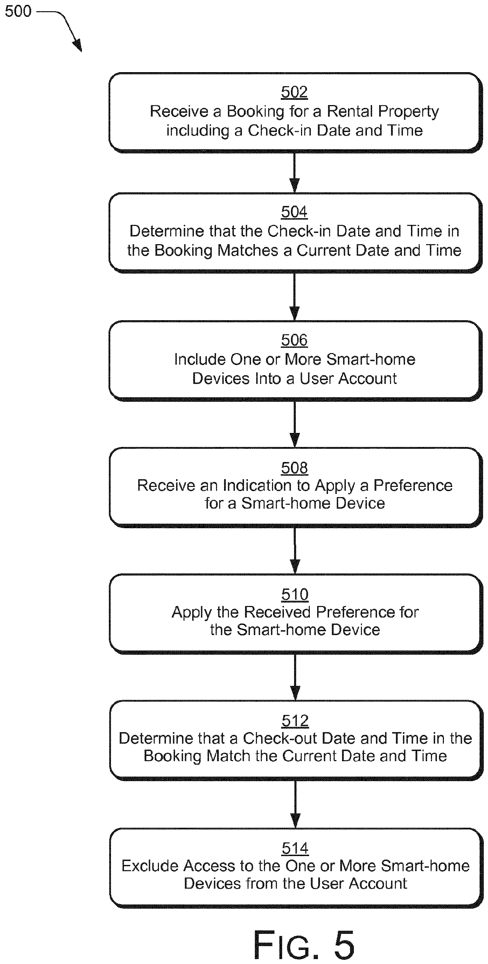

Example method 500 is described with reference to respective FIG. 5 in accordance with one or more aspects of the dynamic inclusion and exclusion of smart-home devices. Generally, any of the components, modules, methods, and operations described herein can be implemented using software, firmware, hardware (e.g., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, or the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), or the like.

FIG. 5 illustrates example method 500 of the dynamic inclusion and exclusion of smart-home devices as generally related to the distributed computing environment 100 for a smart-home system and the environment 400 for the dynamic inclusion and exclusion of smart-home devices. The order in which the method blocks are described are not intended to be construed as a limitation, and any number of the described method blocks can be combined in any order to implement a method, or an alternate method.

At block 502, a smart-home service (*e.g.,* the smart-home service 412) receives a booking for a rental property (*e.g.,* the rental property 410) from a booking service (*e.g.,* the booking service 408), the booking including an indication of one or more smart-home devices installed at the rental property and an indication of a check-in date and time. At block 504, the smart-home service determines that the check-in date and time in the booking match a current date and time.

At block 506, based on the check-in date and time matching the current date and time, the smart-home service enables access to one or more smart-home devices installed at the rental property by including the one or more smart-home devices into a user account. At block 508, the smart-home service receives an indication to apply a preference for one of the smart-home devices installed at the rental property. For example, the smart-home service 412 receives an indication from the guest, via the smart-home application 406, to apply a preference for one of the smart-home devices installed at the rental property 410.

At block 510, the smart-home service applies the received preference for the smart-home device. For example, the smart-home service 412 applies the received preference for the smart-home device by storing the received preference at the smart-home service 412, a hub 120, a smart-home device, or any combination thereof, and associating the preference with resources associated with the smart-home device in the smart-home service 412.

At block 512, the smart-home service determines that a check-out date and time in the booking match the current date and time. At block 514, based on the check-out date and time matching the current date and time, the smart-home service excludes access to the one or more smart-home devices installed at the rental property from the user account.

FIG. 6 illustrates an example environment 600 in which the distributed computing system 100 (as described with reference to FIG. 1), in which aspects of a dynamic inclusion and exclusion of smart-home devices can be implemented. Generally, the environment 600 includes the distributed computing system 100 implemented as part of a smart-home or other type of structure with any number of mesh network devices that are configured for communication in a mesh network. For example, the mesh network devices can include a thermostat 602, hazard detectors 604 (*e.g.,* for smoke and/or carbon monoxide), cameras 606 (*e.g.,* indoor and outdoor), lighting units 608 (*e.g.,* indoor and outdoor), and any other types of mesh network devices 610 that are implemented inside and/or outside of a structure 612 (*e.g.,* in a smart-home environment). In this example, the mesh network devices can also include any of the previously described devices, such as a border router 106, a leader device 306, a commissioning device 304, a hub device 120, as well as any of the devices implemented as a router 202, and/or an end device 206.

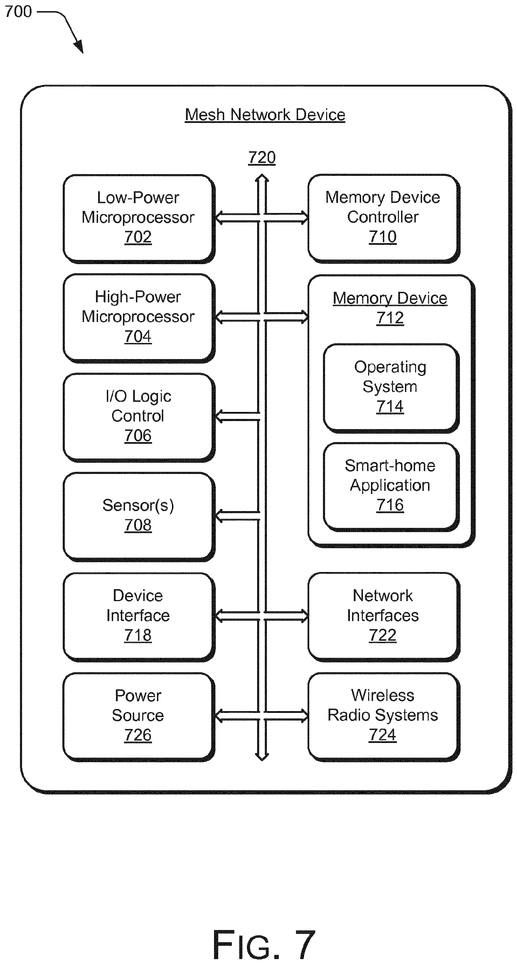

In the environment 600, any number of the mesh network devices can be implemented for wireless interconnection to wirelessly communicate and interact with each other. The mesh network devices are modular, intelligent, multi-sensing, network-connected devices that can integrate seamlessly with each other and/or with a central server or a cloud-computing system to provide any of a variety of useful smart-home objectives and implementations. An example of a mesh network device that can be implemented as any of the devices described herein is shown and described with reference to FIG. 7.

In aspects, the thermostat 602 may include a Nest® Learning Thermostat that detects ambient climate characteristics (*e.g.,* temperature and/or humidity) and controls a HVAC system 614 in the smart-home environment. The learning thermostat 602 and other smart-devices "learn" by capturing occupant settings to the devices. For example, the thermostat learns preferred temperature set-points for mornings and evenings, and when the occupants of the structure are asleep or awake, as well as when the occupants are typically away or at home.

A hazard detector 604 can be implemented to detect the presence of a hazardous substance or a substance indicative of a hazardous substance (*e.g.,* smoke, fire, or carbon monoxide). In examples of wireless interconnection, a hazard detector 604 may detect the presence of smoke, indicating a fire in the structure, in which case the hazard detector that first detects the smoke can broadcast a low-power wake-up signal to all of the connected mesh network devices. The other hazard detectors 604 can then receive the broadcast wake-up signal and initiate a high-power state for hazard detection and to receive wireless communications of alert messages. Further, the lighting units 608 can receive the broadcast wake-up signal and activate in the region of the detected hazard to illuminate and identify the problem area. In another example, the lighting units 608 may activate in one illumination color to indicate a problem area or region in the structure, such as for a detected fire or break-in, and activate in a different illumination color to indicate safe regions and/or escape routes out of the structure.

In various configurations, the mesh network devices 610 can include an entryway interface device 616 that functions in coordination with a network-connected door lock system 618, and that detects and responds to a person's approach to or departure from a location, such as an outer door of the structure 612. The entryway interface device 616 can interact with the other mesh network devices based on whether someone has approached or entered the smart-home environment. An entryway interface device 616 can control doorbell functionality, announce the approach or departure of a person via audio or visual means, and control settings on a security system, such as to activate or deactivate the security system when occupants come and go. The mesh network devices 610 can also include other sensors and detectors, such as to detect ambient lighting conditions, detect room-occupancy states (*e.g.,* with an occupancy sensor 620), and control a power and/or dim state of one or more lights. In some instances, the sensors and/or detectors may also control a power state or speed of a fan, such as a ceiling fan 622. Further, the sensors and/or detectors may detect occupancy in a room or enclosure and control the supply of power to electrical outlets or devices 624, such as if a room or the structure is unoccupied.

The mesh network devices 610 may also include connected appliances and/or controlled systems 626, such as refrigerators, stoves and ovens, washers, dryers, air conditioners, pool heaters 628, irrigation systems 630, security systems 632, and so forth, as well as other electronic and computing devices, such as televisions, entertainment systems, computers, intercom systems, garage-door openers 634, ceiling fans 622, control panels 636, or the like. When plugged in, an appliance, device, or system can announce itself to the mesh network as described above and can be automatically integrated with the controls and devices of the mesh network, such as in the smart-home. It should be noted that the mesh network devices 610 may include devices physically located outside of the structure, but within wireless communication range, such as a device controlling a swimming pool heater 628 or an irrigation system 630.

As described above, the mesh network 200 includes a border router 106 that interfaces for communication with an external network 108, outside the mesh network 200. The border router 106 connects to an access point 110, which connects to the external communication network 108, such as the Internet. A cloud service 112, which is connected via the external communication network 108, provides services related to and/or using the devices within the mesh network 200. By way of example, the cloud service 112 can include applications for the commissioning device 304, such as smart phones, tablets, or the like, to devices in the mesh network, processing and presenting data acquired in the mesh network 200 to end users, linking devices in one or more mesh networks 200 to user accounts of the cloud service 112, provisioning and updating devices in the mesh network 200, and so forth. For example, a user can control the thermostat 602 and other mesh network devices in the smart-home environment using a network-connected computer or portable device, such as a mobile phone or tablet device. Further, the mesh network devices can communicate information to any central server or cloud-computing system via the border router 106 and the access point 110. The data communications can be carried out using any of a variety of custom or standard wireless protocols (*e.g.,* Wi-Fi, ZigBee for low power, 6LoWPAN, Bluetooth Low Energy, etc.) and/or by using any of a variety of custom or standard wired protocols (CAT6 Ethernet, HomePlug, etc.).

Any of the mesh network devices in the mesh network 200 can serve as low-power and communication nodes to create the mesh network 200 in the smart-home environment. Individual low-power nodes of the network can regularly send out messages regarding what they are sensing, and the other low-powered nodes in the environment - in addition to sending out their own messages - can repeat the messages, thereby communicating the messages from node to node (*i.e.,* from device to device) throughout the mesh network. The mesh network devices can be implemented to conserve power, particularly when battery-powered, utilizing low-powered communication protocols to receive the messages, translate the messages to other communication protocols, and send the translated messages to other nodes and/or to a central server or cloud-computing system. For example, an occupancy and/or ambient light sensor can detect an occupant in a room as well as measure the ambient light, and activate the light source when the ambient light sensor 638 detects that the room is dark and when the occupancy sensor 620 detects that someone is in the room. Further, the sensor can include a low-power wireless communication chip (*e.g.,* a ZigBee chip) that regularly sends out messages regarding the occupancy of the room and the amount of light in the room, including instantaneous messages coincident with the occupancy sensor detecting the presence of a person in the room. As mentioned above, these messages may be sent wirelessly, using the mesh network, from node to node (*i.e.,* smart-device to smart-device) within the smart-home environment as well as over the Internet to a central server or cloud-computing system.

In other configurations, various mesh network devices can function as "tripwires" for a security system in the smart-home environment. For example, in the event a perpetrator circumvents detection by security sensors 640 located at windows, doors, and other entry points of the structure or environment, an alarm could still be triggered by receiving an occupancy, motion, heat, sound, etc. message from one or more of the low-powered mesh nodes in the mesh network. In other implementations, the mesh network can be used to automatically turn on and off the lighting units 608 as a person transitions from room to room in the structure. For example, the mesh network devices can detect the person's movement through the structure and communicate corresponding messages via the nodes of the mesh network. Using the messages that indicate which rooms are occupied, other mesh network devices that receive the messages can activate and/or deactivate accordingly. As referred to above, the mesh network can also be utilized to provide exit lighting in the event of an emergency, such as by turning on the appropriate lighting units 608 that lead to a safe exit. The light units 608 may also be turned-on to indicate the direction along an exit route that a person should travel to safely exit the structure.

The various mesh network devices may also be implemented to integrate and communicate with wearable computing devices 642, such as may be used to identify and locate an occupant of the structure and adjust the temperature, lighting, sound system, or the like accordingly. In other implementations, RFID sensing (*e.g.,* a person having an RFID bracelet, necklace, or key fob), synthetic vision techniques (*e.g.,* video cameras and face recognition processors), audio techniques (*e.g.,* voice, sound pattern, vibration pattern recognition), ultrasound sensing/imaging techniques, and infrared or near-field communication (NFC) techniques (*e.g.,* a person wearing an infrared or NFC-capable smartphone), along with rules-based inference engines or artificial intelligence techniques that draw useful conclusions from the sensed information as to the location of an occupant in the structure or environment.

In other implementations, personal comfort-area networks, personal health-area networks, personal safety-area networks, and/or other such human-facing functionalities of service robots can be enhanced by logical integration with other mesh network devices and sensors in the environment according to rules-based inferencing techniques or artificial intelligence techniques for achieving better performance of these functionalities. In an example relating to a personal health-area, the system can detect whether a household pet is moving toward the current location of an occupant (*e.g.,* using any of the mesh network devices and sensors), along with rules-based inferencing and artificial intelligence techniques. Similarly, a hazard detector service robot can be notified that the temperature and humidity levels are rising in a kitchen, and temporarily raise a hazard detection threshold, such as a smoke detection threshold, under an inference that any small increases in ambient smoke levels will most likely be due to cooking activity and not due to a genuinely hazardous condition. Any service robot that is configured for any type of monitoring, detecting, and/or servicing can be implemented as a mesh node device on the mesh network, conforming to the wireless interconnection protocols for communicating on the mesh network.

The mesh network devices 610 may also include a smart-alarm clock 644 for each of the individual occupants of the structure in the smart-home environment. For example, an occupant can customize and set an alarm device for a wake time, such as for the next day or week. Artificial intelligence can be used to consider occupant responses to the alarms when they go off and make inferences about preferred sleep patterns over time. An individual occupant can then be tracked in the mesh network based on a unique signature of the person, which is determined based on data obtained from sensors located in the mesh network devices, such as sensors that include ultrasonic sensors, passive IR sensors, or the like. The unique signature of an occupant can be based on a combination of patterns of movement, voice, height, size, etc., as well as using facial recognition techniques.

In an example of wireless interconnection, the wake time for an individual can be associated with the thermostat 602 to control the HVAC system in an efficient manner so as to pre-heat or cool the structure to desired sleeping and awake temperature settings. The preferred settings can be learned over time, such as by capturing the temperatures set in the thermostat before the person goes to sleep and upon waking up. Collected data may also include biometric indications of a person, such as breathing patterns, heart rate, movement, etc., from which inferences are made based on this data in combination with data that indicates when the person actually wakes up. Other mesh network devices can use the data to provide other smart-home objectives, such as adjusting the thermostat 602 so as to pre-heat or cool the environment to a desired setting, and turning-on or turning-off the lights 608.

In implementations, the mesh network devices can also be utilized for sound, vibration, and/or motion sensing such as to detect running water and determine inferences about water usage in a smart-home environment based on algorithms and mapping of the water usage and consumption. This can be used to determine a signature or fingerprint of each water source in the home, and is also referred to as "audio fingerprinting water usage." Similarly, the mesh network devices can be utilized to detect the subtle sound, vibration, and/or motion of unwanted pests, such as mice and other rodents, as well as by termites, cockroaches, and other insects. The system can then notify an occupant of the suspected pests in the environment, such as with warning messages to help facilitate early detection and prevention.

The environment 600 may include one or more mesh network devices 102 that function as a hub 120. The hub 120 may be a general-purpose home automation hub, or an application-specific hub, such as a security hub, an energy management hub, an HVAC hub, and so forth. The functionality of a hub 120 may also be integrated into any mesh network device 102, such as a smart thermostat device or the border router 106. Hosting functionality on the hub 120 in the structure 612 can improve reliability when the user's internet connection is unreliable, can reduce latency of operations that would normally have to connect to the cloud service 112, and can satisfy system and regulatory constraints around local access between mesh network devices 102.

Additionally, the example environment 600 includes a smart-speaker 646. The smart-speaker 646 provides voice assistant services that include providing voice control of smart-home devices. The functions of the hub 120 may be hosted in the smart-speaker 646. The smart-speaker 646 can be configured to communicate via the mesh network, Wi-Fi, or both.

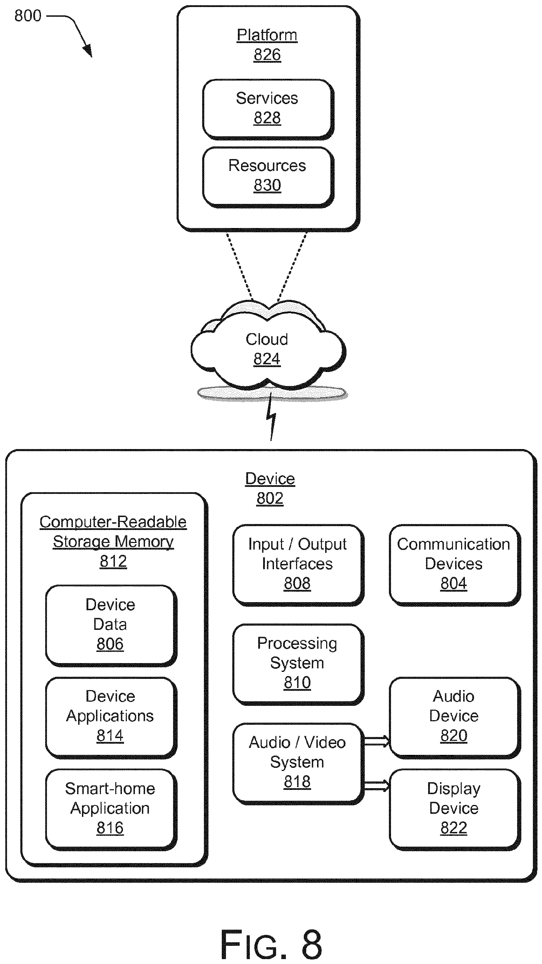

FIG. 7 illustrates an example mesh network device 700 that can be implemented as any of the mesh network devices in a mesh network in accordance with one or more aspects of the dynamic inclusion and exclusion of smart-home devices as described herein. The device 700 can be integrated with electronic circuitry, microprocessors, memory, input output (I/O) logic control, communication interfaces and components, as well as other hardware, firmware, and/or software to implement the device in a mesh network. Further, the mesh network device 700 can be implemented with various components, such as with any number and combination of different components as further described with reference to the example device shown in FIG. 8.

In this example, the mesh network device 700 includes a low-power microprocessor 702 and a high-power microprocessor 704 (*e.g.,* microcontrollers or digital signal processors) that process executable instructions. The device also includes an input-output (I/O) logic control 706 (*e.g.,* to include electronic circuitry). The microprocessors can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The low-power microprocessor 702 and the high-power microprocessor 704 can also support one or more different device functionalities of the device. For example, the high-power microprocessor 704 may execute computationally intensive operations, whereas the low-power microprocessor 702 may manage less complex processes such as detecting a hazard or temperature from one or more sensors 708. The low-power processor 702 may also wake or initialize the high-power processor 704 for computationally intensive processes.

The one or more sensors 708 can be implemented to detect various properties such as acceleration, temperature, humidity, water, supplied power, proximity, external motion, device motion, sound signals, ultrasound signals, light signals, fire, smoke, carbon monoxide, global-positioning-satellite (GPS) signals, radio-frequency (RF), other electromagnetic signals or fields, or the like. As such, the sensors 708 may include any one or a combination of temperature sensors, humidity sensors, hazard-related sensors, security sensors, other environmental sensors, accelerometers, microphones, optical sensors up to and including cameras (*e.g.,* charged coupled-device or video cameras), active or passive radiation sensors, GPS receivers, and radio frequency identification detectors. In implementations, the mesh network device 700 may include one or more primary sensors, as well as one or more secondary sensors, such as primary sensors that sense data central to the core operation of the device (*e.g.,* sensing a temperature in a thermostat or sensing smoke in a smoke detector), while the secondary sensors may sense other types of data (*e.g.,* motion, light or sound), which can be used for energy-efficiency objectives or smart-operation objectives.

The mesh network device 700 includes a memory device controller 710 and a memory device 712, such as any type of a nonvolatile memory and/or other suitable electronic data storage device. The mesh network device 700 can also include various firmware and/or software, such as an operating system 714 that is maintained as computer executable instructions by the memory and executed by a microprocessor. The device software may also include a smart-home application 716 that implements aspects of the dynamic inclusion and exclusion of smart-home devices. The mesh network device 700 also includes a device interface 718 to interface with another device or peripheral component, and includes an integrated data bus 720 that couples the various components of the mesh network device for data communication between the components. The data bus in the mesh network device may also be implemented as any one or a combination of different bus structures and/or bus architectures.

The device interface 718 may receive input from a user and/or provide information to the user (*e.g.,* as a user interface), and a received input can be used to determine a setting. The device interface 718 may also include mechanical or virtual components that respond to a user input. For example, the user can mechanically move a sliding or rotatable component, or the motion along a touchpad may be detected, and such motions may correspond to a setting adjustment of the device. Physical and virtual movable user-interface components can allow the user to set a setting along a portion of an apparent continuum. The device interface 718 may also receive inputs from any number of peripherals, such as buttons, a keypad, a switch, a microphone, and an imager (*e.g.,* a camera device).

The mesh network device 700 can include network interfaces 722, such as a mesh network interface for communication with other mesh network devices in a mesh network, and an external network interface for network communication, such as via the Internet. The mesh network device 700 also includes wireless radio systems 724 for wireless communication with other mesh network devices via the mesh network interface and for multiple, different wireless communications systems. The wireless radio systems 724 may include Wi-Fi, Bluetooth™, Mobile Broadband, Bluetooth Low Energy (BLE), and/or point-to-point IEEE 802.15.4. Each of the different radio systems can include a radio device, antenna, and chipset that is implemented for a particular wireless communications technology. The mesh network device 700 also includes a power source 726, such as a battery and/or to connect the device to line voltage. An AC power source may also be used to charge the battery of the device.

FIG. 8 illustrates an example system 800 that includes an example device 802, which can be implemented as any of the mesh network devices that implement aspects of the dynamic inclusion and exclusion of smart-home devices as described with reference to the previous FIGs. 1-7. The example device 802 may be any type of computing device, client device, mobile phone, tablet, communication, entertainment, gaming, media playback, and/or other type of device. Further, the example device 802 may be implemented as any other type of mesh network device that is configured for communication on a mesh network, such as a thermostat, hazard detector, camera, light unit, commissioning device, router, border router, joiner router, joining device, end device, leader, access point, a hub, and/or other mesh network devices.

The device 802 includes communication devices 804 that enable wired and/or wireless communication of device data 806, such as data that is communicated between the devices in a mesh network, data that is being received, data scheduled for broadcast, data packets of the data, data that is synched between the devices, etc. The device data can include any type of communication data, as well as audio, video, and/or image data that is generated by applications executing on the device. The communication devices 804 can also include transceivers for cellular phone communication and/or for network data communication.

The device 802 also includes input/output (I/O) interfaces 808, such as data network interfaces that provide connection and/or communication links between the device, data networks (*e.g.,* a mesh network, external network, etc.), and other devices. The I/O interfaces can be used to couple the device to any type of components, peripherals, and/or accessory devices. The I/O interfaces also include data input ports via which any type of data, media content, and/or inputs can be received, such as user inputs to the device, as well as any type of communication data, as well as audio, video, and/or image data received from any content and/or data source.

The device 802 includes a processing system 810 that may be implemented at least partially in hardware, such as with any type of microprocessors, controllers, or the like that process executable instructions. The processing system can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The device 802 may further include any type of a system bus or other data and command transfer system that couples the various components within the device. A system bus can include any one or combination of different bus structures and architectures, as well as control and data lines.

The device 802 also includes computer-readable storage memory 812, such as data storage devices that can be accessed by a computing device, and that provide persistent storage of data and executable instructions (*e.g.,* software applications, modules, programs, functions, or the like). The computer-readable storage memory described herein excludes propagating signals. Examples of computer-readable storage memory include volatile memory and non-volatile memory, fixed and removable media devices, and any suitable memory device or electronic data storage that maintains data for computing device access. The computer-readable storage memory can include various implementations of random access memory (RAM), read-only memory (ROM), flash memory, and other types of storage memory in various memory device configurations.

The computer-readable storage memory 812 provides storage of the device data 806 and various device applications 814, such as an operating system that is maintained as a software application with the computer-readable storage memory and executed by the processing system 810. The device applications may also include a device manager, such as any form of a control application, software application, signal processing and control module, code that is native to a particular device, a hardware abstraction layer for a particular device, and so on. In this example, the device applications also include a smart-home application 816 that implements aspects of the dynamic inclusion and exclusion of smart-home devices, such as when the example device 802 is implemented as any of the mesh network devices described herein.

The device 802 also includes an audio and/or video system 818 that generates audio data for an audio device 820 and/or generates display data for a display device 822. The audio device and/or the display device include any devices that process, display, and/or otherwise render audio, video, display, and/or image data, such as the image content of a digital photo. In implementations, the audio device and/or the display device are integrated components of the example device 802. Alternatively, the audio device and/or the display device are external, peripheral components to the example device. In aspects, at least part of the techniques described for the dynamic inclusion and exclusion of smart-home devices may be implemented in a distributed system, such as over a "cloud" 824 in a platform 826. The cloud 824 includes and/or is representative of the platform 826 for services 828 and/or resources 830.

The platform 826 abstracts underlying functionality of hardware, such as server devices (*e.g.,* included in the services 828) and/or software resources (*e.g.,* included as the resources 830), and connects the example device 802 with other devices, servers, etc. The resources 830 may also include applications and/or data that can be utilized while computer processing is executed on servers that are remote from the example device 802. Additionally, the services 828 and/or the resources 830 may facilitate subscriber network services, such as over the Internet, a cellular network, or Wi-Fi network. The platform 826 may also serve to abstract and scale resources to service a demand for the resources 830 that are implemented via the platform, such as in an interconnected device embodiment with functionality distributed throughout the system 800. For example, the functionality may be implemented in part at the example device 802 as well as via the platform 826 that abstracts the functionality of the cloud 824.

Further to the descriptions above, a user (*e.g.,* guest or host) may be provided with controls allowing the user to make an election as to both if and when systems, programs or features described herein may enable collection of user information (*e.g.,* information about a user's social network, social actions or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Although aspects of the dynamic inclusion and exclusion of smart-home devices have been described in language specific to features and/or methods, the subject of the appended claims is not necessarily limited to the specific features or methods described. Rather, the specific features and methods are disclosed as example implementations of the dynamic inclusion and exclusion of smart-home devices, and other equivalent features and methods are intended to be within the scope of the appended claims. Further, various different aspects are described, and it is to be appreciated that each described aspect can be implemented independently or in connection with one or more other described aspects.

## Claims

1. A method for dynamic inclusion of smart-home devices installed at a rental property into an account of a guest by a smart-home service, the method comprising:
receiving a booking for the rental property from a booking service, the booking including an indication of one or more smart-home devices installed at the rental property and an indication of a check-in date and time;
determining that the check-in date and time match a current date and time;
in response to the determining that the check-in date and time match the current date and time, enabling access, by the guest, to the one or more smart-home devices installed at the rental property by:
including the one or more smart-home devices installed at the rental property into the account of the guest with the smart-home service; and
populating a user interface of a smart-home application on a user device of the guest with one or more user interface elements for access to the one or more smart-home devices installed at the rental property, the smart-home application being associated with the account of the guest at the smart-home service.

2. The method of claim 1, comprising:
determining that a check-out date and time, included in the booking, match the current date and time;
in response to the determining that the check-out date and time in the booking match the current date and time, disabling access, by the guest, to the one or more smart-home devices installed at the rental property by:
excluding the one or more smart-home devices installed at the rental property from the account of the guest with the smart-home service; and
causing the smart-home application to depopulate the one or more user interface elements for access to the one or more smart-home devices installed at the rental property from the user interface of the smart-home application.

3. The method of claim 1 or 2, comprising:
applying one or more preferences for a smart-home device installed at a home property of the guest to a smart-home device installed at the rental property.

4. The method of claim 3, comprising:
sending an alert to the smart-home application that is effective to display a user interface prompt to the guest that indicates that the one or more preferences from the smart-home device installed at the home property can be applied to the smart-home device installed at the rental property; and
in response to the display of the user interface prompt, receiving an indication from the guest to apply the one or more preferences from the smart-home device at the home property to the smart-home device installed at the rental property.

5. The method of any one of the preceding claims, comprising:
receiving from the guest a new preference to apply to at least one of the one or more smart-home devices installed at the rental property;
applying, by the smart-home service, the new preference to the at least one of the one or more smart-home devices installed at the rental property.

6. The method of any one of the preceding claims, wherein a host for the rental property determines which smart-home devices installed at the rental property will be included in the indication of the one or more smart-home devices installed at the rental property, and wherein the one or more smart-home devices installed at the rental property includes all of the smart-home devices installed at the rental property or less than all of the one or more smart-home devices installed at the rental property.

7. The method of any one of the preceding claims, wherein a host for the rental property determines which properties of each of the indicated one or more smart-home devices installed at the rental property are available to the guest to control, and wherein the properties of each of the indicated one or more smart-home devices installed at the rental property that are available to the guest includes all of the properties or less than all of the properties of each of the one or more smart-home devices installed at the rental property.

8. A server device comprising:
one or more processors; and
a memory comprising instructions executable by the one or more processors to implement a smart-home service that is configured to:
receive a booking for a rental property from a booking service, the booking including an indication of one or more smart-home devices installed at the rental property and an indication of a check-in date and time;
determine that the check-in date and time match a current date and time;
in response to the determination that the check-in date and time match the current date and time, enable access, by a guest, to the one or more smart-home devices installed at the rental property by:
including the one or more smart-home devices installed at the rental property into an account of the guest with the smart-home service; and
populating a user interface of a smart-home application on a user device of the guest with one or more user interface elements for access to the one or more smart-home devices installed at the rental property, the smart-home application being associated with the account of the guest at the smart-home service.

9. The server device of claim 8, the instructions executable by the one or more processors to:
determine that a check-out date and time, included in the booking, match the current date and time;
in response to the determination that the check-out date and time match the current date and time, disable access, by the guest, to the one or more smart-home devices installed at the rental property by:
excluding the one or more smart-home devices installed at the rental property from the account of the guest with the smart-home service; and
causing the smart-home application to depopulate the one or more user interface elements for access to the one or more smart-home devices installed at the rental property from the user interface of the smart-home application.

10. The server device of claim 8 or 9, the instructions executable by the one or more processors to:
send an alert to the smart-home application that is effective to display a user interface prompt to the guest to indicate that one or more preferences from a smart-home device installed at a home property can be applied to a smart-home device installed at the rental property;
in response to the display of the user interface prompt, receive an indication from the guest to apply the one or more preferences from the smart-home device installed at the home property to the smart-home device installed at the rental property; and
apply the one or more preferences from the smart-home device installed at the home property of the guest to the smart-home device installed at the rental property.

11. A system comprising:
a smart-home application executable by a user device of a guest; and
a smart-home service configured to:
receive a booking for a rental property from a booking service, the booking including an indication of one or more smart-home devices installed at the rental property and an indication of a check-in date and time;
determine that the check-in date and time, in the booking, match a current date and time; and
in response to the determination that the check-in date and time match the current date and time, enable access, by the guest, to the one or more smart-home devices installed at the rental property by:
including the one or more smart-home devices installed at the rental property into an account of the guest with the smart-home service; and
sending an indication of the inclusion of the one or more smart-home devices installed at the rental property into the account of the guest to the smart-home application;
the smart-home application executable by the user device to:
receive the indication of the inclusion of the one or more smart-home devices installed at the rental property; and
populate a user interface on the user device, with one or more user interface elements for access to the one or more smart-home devices installed at the rental property.

12. The system of claim 11,
the smart-home service configured to:
determine that a check-out date and time, included in the booking, match the current date and time;
in response to the determination that the check-out date and time match the current date and time, disable access, by the guest, to the one or more smart-home devices installed at the rental property by:
excluding the one or more smart-home devices installed at the rental property from the account of the guest with the smart-home service; and
sending, to the smart-home application, an indication of the exclusion of the access to the one or more smart-home devices installed at the rental property;
the smart-home application executable by the user device to:
receive the indication of the exclusion of the one or more smart-home devices installed at the rental property from the account of the guest; and
in response to the reception of the indication, depopulate the one or more user interface elements for access to the one or more smart-home devices installed at the rental property from the user interface of the smart-home application.

13. The system of claim 11 or 12,
the smart-home service configured to:
send an alert to the smart-home application to indicate that one or more preferences from a smart-home device installed at a home property can be applied to a smart-home device installed at the rental property;
the smart-home application executable by the user device to:
in response to the reception of the alert, display a user interface prompt indicating that the one or more preferences from the smart-home device installed at the home property can be applied to the smart-home device installed at the rental property;
receive, via the user interface, an input from the guest to apply the one or more preferences from the smart-home device installed at the home property to the smart-home device installed at the rental property;
send an indication to the smart-home service of the guest input; and the smart-home service configured to:
apply the one or more preferences from the smart-home device installed at the home property of the guest to the smart-home device installed at the rental property.

14. The system of any one of claims 11 to 13,
the smart-home application executable by the user device to:
receive from the guest, via the user interface, a new preference to apply to at least one of the one or more smart-home devices installed at the rental property; and
send the new preference to the smart-home service;
the smart-home service configured to:
receive the new guest preference from the smart-home application; and
apply the new preference to the at least one of the one or more smart-home devices installed at the rental property.

15. The system of any one of claims 11 to 14, wherein
- a host for the rental property determines which smart-home devices installed at the rental property will be included in the indication of one or more smart-home devices installed at the rental property, and wherein the one or more smart-home devices installed at the rental property includes all of the smart-home devices installed at the rental property or less than all of the one or more smart-home devices installed at the rental property and/or
- a host for the rental property determines which properties of each of the indicated one or more smart-home devices installed at the rental property are available to the guest to control, and wherein the properties of each of the indicated one or more smart-home devices installed at the rental property that are available to the guest includes all of the properties or less than all of the properties of each of the one or more smart-home devices installed at the rental property.
